# EUROPEAN PATENT APPLICATION

(11) **EP 4 080 081 A1**
(43) Date of publication of application: **26.10.2022**
(21) Application number: 21170276.6
(22) Date of filing: 23.04.2021
(51) Int. Cl.: F16D 65/14

(54) **BRAKING SYSTEM FOR A COMMERCIAL VEHICLE AND COMMERCIAL VEHICLE COMPRISING SUCH BRAKING SYSTEM**

(71) Applicant: KNORR-BREMSE Systeme für Nutzfahrzeuge GmbH, 80809 München (DE)
(72) Inventor: HOLLOSI, Mate, 1097 Budapest (HU); KLINGNER, Matthias, 82275 Emmering (DE); BLESSING, Michael, 80687 München (DE); PESCHEL, Michael, 82296 Schöngeising (DE); GYÖRKE, Zsombor, 8360 Keszthely (HU); MLINARCSEK, Csaba, 1165 Budapest (HU); SCHALLER, Sebastian, 86462 Langwied (DE); STANKOVIC, Dordo, 81929 München (DE); SZABO, Janos, 1042 Budapest (HU); KOKREHEL, Csaba, 1119 Budapest (HU); HÖS, Levente, 1047 Budapest (HU); MONORI, Gyula, 6065 Lakitelek (HU); KRÜGER, Sven Philip, 81476 München (DE); SCHÖFBERGER, Tobias, 84048 Mainburg (DE)
(74) Representative: Prüfer & Partner mbB Patentanwälte · Rechtsanwälte

(57) **Abstract**

The present invention relates to a braking system for a commercial vehicle, comprising:
a transfer element (5) movable between at least one braking position to apply a braking force on a brake (2) and a release position,
a brake actuator (4) configured to move the transfer element (5) into the at least one braking position and/or to hold the transfer element (5) in the at least one braking position, and
an actuating device (3) configured to actuate the brake actuator (4)
wherein the brake actuator (4) comprises a transmission mechanism (4b) configured to convert an initial force initiated by the actuating device (3) in an actuation force to be applied to the transfer element (5) with a transmission ratio of more than one.

## Description

The present invention relates to a braking system for a commercial vehicle and a commercial vehicle comprising such braking system.

Commercial vehicles, like trucks, tractor units or trailers, comprise braking systems capable of applying braking forces to axles or wheels to decelerate the commercial vehicles during a driving operation or to secure the commercial vehicles against an unintended movement during non-driving operations. Such braking systems and respective brake actuators are arranged near the axle or wheel to be decelerated or secured. However, the installation space near the axle or wheel is limited.

Accordingly, it is an object of the present invention to provide a braking system for a commercial vehicle and a respective commercial vehicle allowing a reduced installation space.

The object is solved by a braking system for a commercial vehicle according to claim 1 and a commercial vehicle according to claim 13. Further aspects of the present invention are subject of the dependent claims.

The inventive braking system for a commercial vehicle comprises a transfer element movable between at least one braking position to apply a braking force on a brake and a release position, a brake actuator configured to move the transfer element into the at least one braking position and/or to hold the transfer element in the at least one braking position, and an actuating device configured to actuate the brake actuator. Further, the brake actuator comprises a transmission mechanism configured to convert an initial force initiated by the actuating device in an actuation force to be applied to the transfer element with a transmission ratio of more than one.
The transfer element may directly apply a braking force on a brake in the at least one braking position, for example, by comprising a braking member, such as a brake body or brake caliper. Alternatively, the transfer element may indirectly apply a braking force on a brake in the at least one braking position, by actuating a respective braking member. To apply different braking forces to the brake, the transfer element may be moved in different braking positions. Accordingly, the release position of the transfer element is a position, in which no braking force is applied on the brake. The brake may be a friction-based brake such as a disc brake, a drum brake or other friction based brake, e.g. a barrel tensioner or band brake. The brake may be assigned to at least one wheel or axle.

Further, the transfer element may be moved translationally, e.g. in a moving direction corresponding to its longitudinal axis. Alternatively, the transfer element may be moved rotationally, e.g. pivoted around a pivot to act as tilting lever or the like. As another example, the transfer element may be configured as toggle lever.

The brake actuator may be configured to move the transfer element into the at least one braking position. Further, the brake actuator may be configured to hold the transfer element in the at least one braking position. However, holding the transfer element in the at least one braking position may also be implemented by a separate locking mechanism. In another variation, the brake actuator may only hold the transfer element in the at least one braking position. For example, the transfer element may be moved in the at least one braking position by another actuator and is than locked in such position by the brake actuator. Thus, the brake actuator does not necessarily have to be configured to provide a moving force but only a holding force for the transfer element.

The brake actuator may be configured to move the transfer element into the at least one braking position and/or to hold the transfer element in the at least one braking position when activated. Such configuration corresponds to an active brake actuator. Alternatively, the brake actuator may be configured to move the transfer element into the at least one braking position and/or to hold the transfer element in the at least one braking position when deactivated. Such configuration corresponds to a passive brake actuator.

An activated state is a state due to an actuation, for example, based on an energization or concrete operation. Accordingly, a deactivated state is a state without any energization or concrete operation.

Even though further explanations with respect to different embodiments may be directed to a passive or active brake actuator, the same principles apply vice versa for the respectively other brake actuator configuration with reversed operating mechanisms.

The brake actuator is actuated by an actuating device. Accordingly, the actuating device actuates the brake actuator to move the transfer element into the at least one braking position and/or to hold the transfer element in the at least one braking position.

The actuating device is not restricted to the actuation of a single brake actuator but may also be configured to actuate more than one brake actuator of the braking system. For example, the braking system comprises a brake actuator and respective transfer elements for each wheel or at least each axle. Accordingly, the actuating device may be configured to actuate all or at least some of the several brake actuators. The actuating device may therefore serve as central actuating device. This general principle of a central actuating device may also be applicable to other braking systems. Accordingly, any embodiment described herein may be combined with such central actuating device irrespective of any other features of a specific embodiment.

Since the brake actuator further comprises a transmission mechanism configured to convert an initial force initiated by the actuating device in an actuation force to be applied to the transfer element with a transmission ratio of more than one, the brake actuator or at least parts thereof to be arranged near a wheel or axle may provide a space-saving, compact design while still allowing the transmission of high forces.

In some embodiments, the brake actuator is configured to apply an actuation force centrally and/or uniformly to a respective receiving surface of the transfer element or to a membrane interposed between the brake actuator and the transfer element to transmit a force applied from the brake actuator to the transfer element.

To avoid an unintended tilting of the transfer element or application of torque on the transfer element, the application of force from the brake actuator to the transfer element may be provided centrally and/or uniformly with respect to a respective receiving surface of the transfer element. For example, a central application of force may be provided by the brake actuator contacting a force receiving surface of the transfer element in or symmetrically with respect to a center of the receiving surface. As another example, a uniform application of force may also be provided via a membrane interposed between the brake actuator and the transfer element to transmit a force applied from the brake actuator uniformly to the transfer element.

In some embodiments, the transmission mechanism comprises a toggle lever, an eccentric mechanism, a cam, a wedge, rocker arm and/or a ball ramp with variable pitch.

The toggle lever may provide an increasing force transmission ratio when progressively actuated. When moving the toggle lever in its dead center or beyond, the latter combined with a mechanical end stop for providing a locking effect, the toggle lever provides a secure holding force. However, a further readjustment beyond such position is impeded. Consequently, if the toggle lever may be intended to provide a readjustment with respect to the at least one braking position to compensate for a cooling down of the brake and/or wear, the toggle lever may not be moved into its dead center. Alternatively or in addition, such readjustment may be provided by biased components between the toggle lever and the transfer element and/or by acting on the toggle lever towards the transfer element.

Preferably, the transmission mechanism converts the initial force initiated by the actuating device in an actuation force progressively.

Alternatively or in addition, the transmission mechanism comprises an eccentric mechanism. For example, the eccentric mechanism may be provided by a circular disk rotatable about a pivot axis, which is offset from the center of the circular disk. The transfer element or a respective membrane may be moved and/or held in the at least one braking position by the circular disk or a further member coupled thereto, such as an eccentric rod.

Alternatively or in addition, the transmission mechanism comprises a cam. Similar to the eccentric mechanism, the cam is configured to transform a rotary motion into a linear motion. However, the cam is not necessarily eccentrically supported by a pivot but transforms a respective motion due to its shape.

Alternatively or in addition, the transmission mechanism comprises a wedge. The term wedge represents a body with an inclined surface facing the surface of the transfer element to receive a respective force. Moving the wedge in parallel to the surface of the transfer element in a direction, in which the inclination extends, results in different contact points along the inclination. Accordingly, the force applied to the wedge during such movement is converted into a force perpendicular to the inclined surface to move the transfer element. A respective transmission ratio may be achieved by a predetermined inclination. To adapt the inclination and therefore the transmission ratio, the wedge may be pivotably supported to provide different inclination angles.

Alternatively or in addition, the transmission mechanism comprises a ball ramp with variable pitch. A ball received within a ramp of the ball ramp may be placed in contact with the surface of the transfer element or an interposed membrane to receive a respective force. Since the ramp provides a variable pitch, e.g. a respective inclination, a relative movement between the ball and the ramp causes the ball to project from the ramp towards the receiving surface with a variable projection height. A relative movement may be a rotational movement with a ramp arranged in a circular arc or a translational movement with a straight ramp. Accordingly, the ball ramp is capable of varying the distance between the ball ramp and the transfer element or membrane and/or transmitting a respective force to the transfer element or membrane.

In some embodiments, the brake actuator comprises or acts on a friction member to apply the actuation force to the transfer element.

The friction member is configured to frictionally engage with the transfer element. The frictional engagement may at least hold the transfer element in the at least one braking position. Accordingly, the brake actuator or at least the friction member may not necessarily move the transfer element in the at least one braking position but may hold the transfer element after being moved in such position, for example, by another brake actuator, e.g. a second brake actuator, such as a main brake actuator or primary brake actuator, respectively, as addressed later. Therefore, the brake actuator may only be configured to apply a respective holding force.

In some embodiments, the brake actuator comprises or acts on a form-fit member to apply the actuation force to the transfer element.

The form-fit member may be configured to engage with the transfer element or an interposed membrane to at least hold, i.e. applying a sufficient holding force by friction or lock, the transfer element in the at least one braking position. The form-fit member may also be configured to engage with the transfer element or an interposed membrane to move the transfer element in the at least one braking position. For example, an engagement may be provided by the form-fit member configured as projection received by a corresponding groove of the transfer element, or vice versa.

In some embodiments, the transmission mechanism is configured to move the friction member and/or the form-fit member in an actuation direction substantially perpendicular and/or in parallel to a longitudinal axis of the transfer element.

For example, if the longitudinal axis of the transfer element corresponds to the moving direction of the transfer element, moving the friction member and/or the form-fit member in an actuation direction substantially perpendicular to a longitudinal axis of the transfer element allows at least a holding of the transfer element in the at least one braking position. Accordingly, the friction member and/or the form-fit member engage(s) with a radial surface of the transfer element with respect to the longitudinal axis when moved in an actuation direction substantially perpendicular to the longitudinal axis of the transfer element. Alternatively or in addition, if the longitudinal axis of the transfer element corresponds to the moving direction of the transfer element, moving the friction member and/or the form-fit member in an actuation direction substantially in parallel to a longitudinal axis of the transfer element may not only allow a holding of the transfer element in the at least one braking position moving the transfer element in such position.

In some embodiments, the friction member and/or the form-fit member is/are biased in the actuation direction.

The friction member and/or the form-fit member may be biased in the actuation direction by a compression spring acting in the actuation direction. Consequently, the friction member and/or the form-fit member may be configured to provide a readjustment with respect to the at least one braking position to compensate for a cooling down of the brake and/or wear.

In some embodiments, the brake actuator further comprises a cable control, in particular, a bowden cable.

A cable control, in particular a bowden cable, represents a flexible element to provide tensile forces when tensioned and/or pulled. For example, the bowden cable as cable control may be tensioned or pulled, respectively, by the actuating device. In the event of a passive brake actuator, a deactivated state of the actuating device or a tensioned state of the cable control, such as the bowden cable, corresponds to a deactivated or passive state of the brake actuator, in which the brake actuator, specifically the cable control, moves the transfer element in the at least one braking position and/or holds the transfer element in the at least one braking position by actuating the transmission mechanism.

In some embodiments, the actuating device comprises a pneumatically, hydraulically, electromechanically and/or mechanically driven actuating mechanism, preferably a pre-loaded actuating mechanism, in particular a spring loaded actuating mechanism.

For example, the spring-loaded actuating mechanism representing an exemplary embodiment of a pre-loaded actuating mechanism may comprise a compression spring.

A compression of the compression spring relative to an initial state may correspond to an actived state. With a release of the compression, i.e. in a deactivated state, the compression spring releases the previously stored deformation energy and returns to its initial state. With respect to the brake actuator configured as passive brake actuator, the actuating device thus may actuate the transmission mechanism of the brake actuator to move and/or hold the transfer element in the at least one braking position when deactivated due to the compression spring staying or returning in its initial state. In the given example, the actuating device thus may actuate the brake actuator to release the transfer element from the at least one braking position to return in the release position when activated due to a compression of the compression spring. In other words, the brake actuator is in an activated state when the spring of the spring-loaded actuating mechanism is deformed due to a concrete operation and in a deactivated state when the spring is in its initial state.

However, the actuating device is not limited to spring-loaded actuating mechanisms or pre-loaded actuating mechanisms, respectively, but may alternatively be provided by other mechanisms configured to actuate the brake actuator, such as levers, sliders, pushing and/or pulling means, cams, wedges, cylinder-piston devices or the like. In principle, the device may be understood as any device capable of actuating the brake actuator by pneumatically, hydraulically, electromechanically and/or mechanically working means.

In some embodiments, the brake actuator is a main brake actuator configured to apply a braking force during a driving operation of the commercial vehicle, preferably when being activated.

The main brake actuator or primary brake actuator, respectively, is mainly intended to apply a braking force on the brake via the transfer element during a driving operation. In other words, the main brake actuator primarily actuates the transfer element to be moved in the at least one braking position to adjust a speed of the commercial vehicle. However, the main brake actuator may also be used to secure the commercial vehicle against an unintended movement during a non-driving operation as addressed below.

An activated state is a state due to an actuation, for example, based on an energization or concrete operation. Accordingly, a deactivated state is a state without any energization or concrete operation. With the main brake actuator configured to move the transfer element in the at least one braking position when activated, the main brake actuator operates as active main brake actuator, e.g. actuating the transfer element by the main brake actuator requires a respective activation. As the main brake actuator is mainly intended to adjust a speed during a driving operation, an active brake concept, i.e. with the main brake actuator configured to apply a braking force when being activated, may avoid unintended braking.

In some embodiments, the brake actuator is a secondary brake actuator configured to apply a braking force during a non-driving operation of the commercial vehicle, preferably when being or becoming deactivated.

The secondary brake actuator is configured to secure the commercial vehicle against an unintended movement during a non-driving operation. Consequently, the at least one braking position of the transfer element is a position to transfer a braking force sufficient for such propose under conventional specifications. However, more than one braking position may be provided to allow an adjustment to different boundary conditions while, for example, considering respective loads on the braking system.

Similar to the main brake actuator or primary brake actuator, respectively, the secondary brake actuator may be configured to move the transfer element into the at least one braking position. Further, the secondary brake actuator may be configured to hold the transfer element in the at least one braking position. However, holding the transfer element in the at least one braking position may also be implemented by a separate locking mechanism. In another variation, the secondary brake actuator may only hold the transfer element in the at least one braking position. For example, the transfer element may be moved in the at least one braking position by the main brake actuator and is then held or locked in such position by the secondary brake actuator. Thus, the secondary brake actuator does not necessarily have to be configured to provide a moving force but only a holding force for the transfer element.

Further, with the secondary brake actuator configured as passive brake actuator, the secondary brake actuator does not necessarily need to be actively actuated during a non-driving operation to secure the commercial vehicle against an unintended movement. For example, an electric commercial vehicle may not provide sufficient power, at least for an unlimited period of time, to keep an active secondary brake actuator in an active state to secure the commercial vehicle. With the use of a passive secondary brake actuator an energization or the like is not required during a non-driving operation, in particular, when the commercial vehicle is in a non-operating state, i.e. turned off. Similarly, any defect with respect to an activation of the secondary brake actuator does not affect a braking operation by the secondary brake actuator in this context.

In some embodiments, the secondary brake actuator is configured to hold the transfer element in a braking position initiated by a main brake actuator.

Accordingly, the main brake actuator is not restricted to apply a braking force to the brakes by moving the transfer element in a respective position but is also configured to move the transfer element in the at least one braking position during a non-driving operation to be held in such position be the secondary brake actuator, preferably even if the main brake actuator is deactivated or released, respectively. The actuation of the main brake actuator to move the transfer element into the at least one braking position during such non-driving operation may be initiated automatically when the secondary brake actuator is actuated to hold the transfer element in the at least one braking position.

Further, the secondary brake actuator may only be configured to hold the transfer element in a braking position initiated by a main brake actuator but not necessarily to move the transfer element. Therefore, the secondary brake actuator may be configured for lower forces and thus more compact.

In another aspect, the present invention relates to a commercial vehicle, in particular an electric vehicle or hybrid vehicle, comprising a braking system as described above.

The vehicle is preferably configured as a truck, a trailer and/or a combination of a towing vehicle and a trailer. Preferably, the vehicle is configured as an electric vehicle, in particular a battery electric or fuel cell electric vehicle, a hybrid or a conventional vehicle.

Respective effects and advantages comply with the effects and advantages already discussed. In particular with respect to electric vehicles or hybrid vehicles, the installation space and weight is a crucial factor.

Further advantages, aspects and details of the disclosure are subject to the claims, the following description of preferred embodiments applying the principles of the disclosure and drawings. In particular:
**Fig. 1** is a schematic top view of an axle arrangement of a commercial vehicle with a brake system according to an exemplary embodiment;
**Fig. 2** is a schematic view of a transmission mechanism of a brake actuator of a braking system according to a first exemplary embodiment;
**Fig. 3** is a schematic view of a friction member acting on a transfer element according to a first exemplary embodiment; and
**Fig. 4** is a schematic view of a friction member acting on a transfer element according to a second exemplary embodiment.

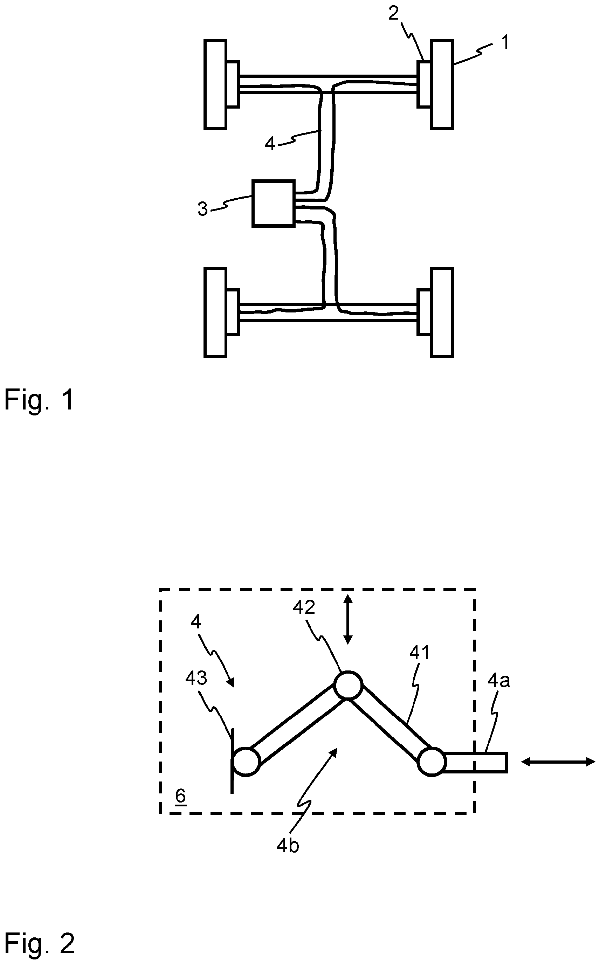

**Fig. 1** shows a schematic top view of an axle arrangement of a commercial vehicle with a brake system according to an exemplary embodiment. Here, two axles are provided with each axle driving two wheels 1. Each of the wheels 1 is provided with a brake 2. In alternative embodiments, the brake 2 may be provided for each axle instead of each wheel 1. To apply a braking force to the brakes 2 by the braking system, the braking system comprises a brake actuator 4 for each of the brakes 2. Each of the actuators 4 is actuated by one and the same central actuating device 3. Thus, the central actuating device 3 requires less installation space than an actuating device for each actuator, respectively. In particular, the central brake actuating device 3 is displaced from the limited space available near the wheels 1 or brakes 2, respectively. The braking system comprising the central actuating device 3 is a principle concept of the present disclosure that may be applicable to any of the following embodiments and is considered to be combinable with any feature independently. However, in alternative embodiments, each of the brake actuators may be actuated by independent actuating devices and/or arranged in the vicinity of the brakes.

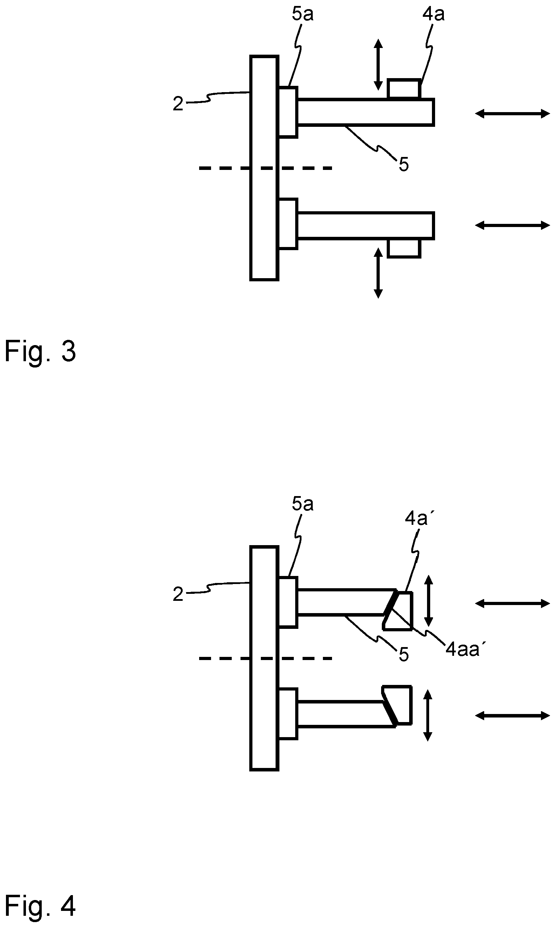

**Fig. 2** is a schematic view of a transmission mechanism 4b of a brake actuator 4 of a braking system according to a first exemplary embodiment. The transmission mechanism 4b of the brake actuator 4 comprises a toggle lever 41 with a respective pivot 42. The one end of the toggle lever 41 is connected to a friction member 4a, described later with reference to **Fig. 3****,** and the other end of the toggle lever 41 rests against a stop 43. An actuation of the transmission mechanism 4b is indicated by the bidirectional arrow. If the toggle lever 41 is expanded, i.e. the distance between the respective ends of the toggle lever 41 is increased, the friction member 4a is moved in a direction away from the stop 43. However, in alternative embodiments, the one end of the toggle lever 41 may be connected to the transfer element 5 instead of the friction member 4a or configured to contact the transfer element 5 to move and/or hold the transfer element 5 in the at least one braking position. In such event, the at least one braking position of the transfer element 5 corresponds to a state of the toggle lever 41 before reaching its dead center. Therefore, the transmission mechanism 4b is capable of readjusting the at least one braking position in the event of cooled down brakes or wear. The same applies with respect to the toggle lever 41 being connected to the friction member 4a as per the present embodiment. Here, a predetermined position of the friction member 4a with respect to at least hold the transfer element in the at least one braking position should be provided before the toggle lever 41 reaches its dead center to allow a subsequent readjustment. However, in alternative embodiments, the friction member 4a may be, alternatively or in addition, biased to accomplish such readjustment.

**Fig. 3** is a schematic view of a friction member 4a acting on a transfer element 5 according to the first exemplary embodiment.

In the present embodiment, the braking system comprises two transfer elements 5 to apply a braking force on the brake 2. However, in alternative embodiments, the braking system comprises only one or more than two transfer elements 5. Each of the transfer elements 5 comprises a braking member 5a to directly act on the brake 2. However, in alternative embodiments, the transfer elements 5 may indirectly act on the brake 2 by applying a respective force to intermediate members operatively arranged between the respective transfer element 5 and the brake 2. For example, as an intermediate member a plate with a brake pad can be provided, wherein the transfer elements 5 are configured to act on the plate to engage the brake pad with a brake disc. The brake actuator comprises a friction member 4a configured to engage a radial surface of the transfer element 5 to hold the transfer element in the at least one braking position. Accordingly, the friction members 4a are movable perpendicular to the moving direction of the transfer element 5 between an engagement position to apply a holding force and a non-engagement position to allow a movement of the transfer element 5 as indicated by the vertical bidirectional arrow. The friction member 4a is biased to allow a readjustment of a respective engagement position to compensate for tolerances or wear. However, in alternative embodiments, the readjustment may be provided by other elements of the brake actuator or by the actuating device. The transfer element 5 is moved in the at least one braking position by another brake actuator (not shown), as indicated by the horizontal bidirectional arrow, to be held by the friction member 4a when actuated by the brake actuator accordingly. Thus, the other brake actuator of the present embodiment is configured to move the transfer element 5 in the at least one braking position during a driving operation as well as a non-driving operation. With respect to the present embodiment, the actuation of the friction member 4a is configured to provide a sufficient holding force to hold the transfer element 5 in the at least one braking position even after deactivation of the other brake actuator. However, in alternative embodiments, the other brake actuator may be further activated. According to the present embodiment, the brake actuator is configured as secondary brake actuator while the other brake actuator is configured as main brake actuator. Described principles for moving the transfer element in the at least one braking position may apply for such main brake actuator.

**Fig. 4** is a schematic view of a friction member 4a' acting on a transfer element 5 according to a second exemplary embodiment. The second embodiment differs from the first embodiment in the configuration of the friction member and the respective holding characteristic of the transfer element 5. Similar to the first embodiment, the braking system comprises two transfer elements 5 to apply a braking force on the brake 2. As the operating mechanism for each of the transfer elements 5 is equal, the following description only refers to one of the transfer elements 5. Here, the brake actuator comprises a friction member 4a' configured to hold the transfer element 5 in the at least one braking position when respectively actuated. The friction member 4a' comprises a wedge surface 4aa' facing an end face of the transfer element 5 opposite to the braking member 5a. The end face of the transfer element 5 is inclined with respect to a plane perpendicular to the moving direction of the transfer element 5, indicated by the horizontal bidirectional arrow. The inclination of the end face of the transfer element 5 corresponds to the inclination of the wedge surface 4aa' to provide a contact area between the end face of the transfer element and the wedge surface 4aa' when the wedge surface 4aa' is moved against the inclined end face of the transfer element 5, as indicated by the vertical bidirectional arrow. Due to the wedge surface 4aa' the friction member 4a' is capable of readjusting the at least one braking position in the event of a cooling down of the brake 2 or wear. The friction member 4a' is therefore biased to stay in contact with the inclined end face of the transfer element 5 when holding the transfer element 5 in the at least one braking position. Further, the wedge surface 4aa' also provides a form-fit engagement or forms a mechanical stop, respectively, when the wedge surface 4aa' engages the inclined end face of the transfer element 5.

Similar to the first embodiment, the brake actuator of the present embodiment is configured to hold the transfer element 5 in the at least one braking position and to readjust such position. Moving the transfer element 5 in the at least one braking position is performed by another brake actuator (not shown). Consequently, the brake actuator of the present embodiment is configured as secondary brake actuator while the other brake actuator is configured as main brake actuator. Described principles for moving the transfer element in the at least one braking position may apply for such main brake actuator. However, in alternative embodiments, the brake actuator comprising the friction member 4a' and therefore the friction member 4a' and the wedge surface 4aa', respectively, may be configured to move and hold the transfer element 5 in the at least one braking position independent from any other brake actuator.

It is to be noted that the given examples are specific embodiments and not intended to restrict the scope of protection given in the claims. In particular, single features of one embodiment may be combined with another embodiment.

### LIST OF REFERENCE SIGNS

- 1: wheel
- 2: brake
- 3: actuating device
- 4: brake actuator
- 4a, 4a': friction member
- 4aa': wedge surface
- 4b: transmission mechanism
- 5: transfer element
- 5a: braking member (transfer element)
- 41: toggle lever
- 42: pivot
- 43: stop

## Claims

1. Braking system for a commercial vehicle, comprising:
a transfer element (5) movable between at least one braking position to apply a braking force on a brake (2) and a release position,
a brake actuator (4) configured to move the transfer element (5) into the at least one braking position and/or to hold the transfer element (5) in the at least one braking position, and
an actuating device (3) configured to actuate the brake actuator (4)
wherein the brake actuator (4) comprises a transmission mechanism (4b) configured to convert an initial force initiated by the actuating device (3) in an actuation force to be applied to the transfer element (5) with a transmission ratio of more than one.

2. Braking system according to claim 1, wherein the brake actuator (4) is configured to apply an actuation force centrally and/or uniformly to a respective receiving surface of the transfer element (5) or to a membrane interposed between the brake actuator (4) and the transfer element (5) to transmit a force applied from the brake actuator (4) to the transfer element (5).

3. Braking system according to claim 1 or 2, wherein the transmission mechanism (4b) comprises a toggle lever (41), an eccentric mechanism, a cam, a wedge, rocker arm and/or a ball ramp with variable pitch.

4. Braking system according to any one of the preceding claims, wherein the brake actuator (4) comprises or acts on a friction member (4a, 4a') to apply the actuation force to the transfer element (5).

5. Braking system according to any one of the preceding claims, wherein the brake actuator (4) comprises or acts on a form-fit member to apply the actuation force to the transfer element (5).

6. Braking system according to claim 4 or 5, wherein the transmission mechanism (4b) is configured to move the friction member (4a, 4a') and/or the form-fit member in an actuation direction substantially perpendicular and/or in parallel to a longitudinal axis of the transfer element (5).

7. Braking system according to claim 6, wherein the friction member (4a, 4a') and/or the form-fit member is/are biased in the actuation direction.

8. Braking system according to any one of the preceding claims, wherein the brake actuator (4) further comprises a cable control, in particular a bowden cable.

9. Braking system according to any one of the preceding claims, wherein the actuating device (3) comprises a pneumatically, hydraulically, electromechanically and/or mechanically driven actuating mechanism, preferably a pre-loaded actuating mechanism, in particular a spring-loaded actuating mechanism.

10. Braking system according to any one of the preceding claims, wherein the brake actuator (4) is a main brake actuator configured to apply a braking force during a driving operation of the commercial vehicle, preferably when being activated.

11. Braking system according to any one of claims 1 to 9, wherein the brake actuator (4) is a secondary brake actuator configured to apply a braking force during a non-driving operation of the commercial vehicle, preferably when being or becoming deactivated.

12. Braking system according to claim 11, wherein the secondary brake actuator is configured to hold the transfer element (5) in a braking position initiated by a main brake actuator.

13. Commercial vehicle, in particular an electric vehicle or hybrid vehicle, comprising a braking system according to any one of the claims 1 to 12.
